# EUROPEAN PATENT APPLICATION

(11) **EP 3 282 375 A1**
(43) Date of publication of application: **14.02.2018**
(21) Application number: 17181626.7
(22) Date of filing: 17.07.2017
(51) Int. Cl.: G06F 17/50

(54) **COMPUTER IMPLEMENTED METHODS, APPARATUS, COMPUTER PROGRAMS AND NON-TRANSITORY COMPUTER READABLE STORAGE MEDIUMS FOR AUTOMATICALLY DESIGNING A SECONDARY AIR SYSTEM FOR A GAS TURBINE ENGINE**

(30) Priority: 12.08.2016 GB 201613837
(71) Applicant: Rolls-Royce plc, London SW1E 6AT (GB)
(72) Inventor: di Mare, Luca, Derby, Derbyshire DE24 8BJ (GB); Kulkarni, Davendu, Derby, Derbyshire DE24 8BJ (GB)
(74) Representative: Rolls-Royce plc

(57) **Abstract**

A computer implemented method of automatically designing a secondary air system for a gas turbine engine. The method comprises: receiving a geometry model of at least a part of a gas turbine engine, the geometry model including a plurality of data entities for a plurality of features of the gas turbine engine; defining a plurality of cavities using the plurality of data entities of the geometry model; determining a subset of cavities of the plurality of cavities that define at least a part of the secondary air system; and generating a secondary air system model from the determined subset of cavities that define at least a part of the second airflow system.

## Description

### TECHNOLOGICAL FIELD

The present disclosure concerns a computer implemented methods, apparatus, computer programs and non-transitory computer readable storage mediums for automatically designing a secondary air system for a gas turbine engine.

### BACKGROUND

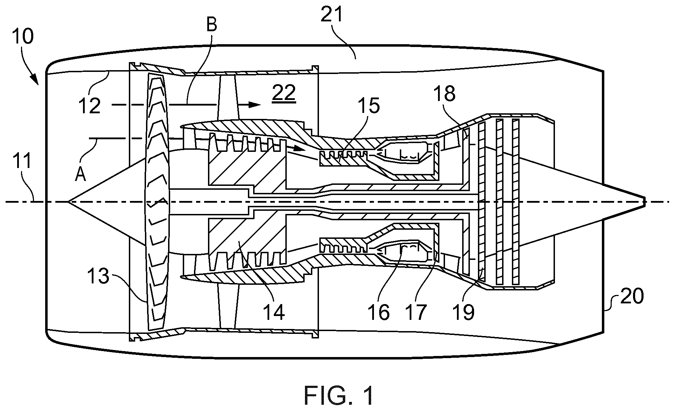

Gas turbine engines may be used to power various systems. For example, gas turbine engines may be used to power aircraft, ships and electrical generators. Fig. 1 illustrates a gas turbine engine 10 for an aircraft according to an example. The gas turbine engine 10 has a principal and rotational axis 11 and comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19, and an exhaust nozzle 20. A nacelle 21 generally surrounds the engine 10 and defines both the intake 12 and the exhaust nozzle 20.

In operation, air entering the intake 12 is accelerated by the fan 13 to produce two air flows: a first air flow (represented by arrow A in Fig. 1) into the intermediate pressure compressor 14 and a second air flow (represented by arrow B in Fig. 1) which passes through a bypass duct 22 to provide propulsive thrust. The first air flow and the second air flow may be referred to as a 'primary air system'. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by a suitable interconnecting shaft.

The gas turbine engine 10 also includes a 'secondary air system' (not illustrated in Fig. 1 to maintain the clarity of Fig. 1). The secondary air system is arranged to ingress a portion of the air flowing through the primary air system and to deliver the air to various components within the gas turbine engine. For example, the secondary air system may be arranged to ingress a portion of the air flowing through the intermediate pressure compressor 14 and to provide the air to one or more of the high pressure turbine 17, the intermediate pressure turbine 18, and the low pressure turbine 19 for the cooling of turbine blades. The air entered into secondary air system may be egressed to low pressure locations in the primary air flow path, delivered to customer bleeds or ejected over board to maintain the secondary air circulation.

### BRIEF SUMMARY

According to various examples there is provided a computer implemented method of automatically designing a secondary air system for a gas turbine engine, the method comprising: receiving a geometry model of at least a part of a gas turbine engine, the geometry model including a plurality of data entities for a plurality of features of the gas turbine engine; defining a plurality of cavities using the plurality of data entities of the geometry model; determining a subset of cavities of the plurality of cavities that define at least a part of the secondary air system; and generating a secondary air system model from the determined subset of cavities that define at least a part of the secondary air system.

Generating the secondary air system model may include generating node data entities from the subset of cavities by feature transformation.

Generating the secondary air system model may include generating link data entities that represent airflow paths coupled to the subset of cavities by feature transformation.

Determining the subset of cavities that define at least a part of the secondary air system may include analysing geometrical data of the defined plurality of cavities.

The computer implemented method may further comprise automatically adapting the geometry model of the gas turbine engine to account for an adaptation to the secondary air system model.

The computer implemented method may further comprise automatically adapting the generated secondary air system model to account for an adaptation to the geometry model.

The computer implemented method may further comprise controlling output of a general assembly of the gas turbine engine including the generated secondary air system model.

The computer implemented method may further comprise performing flow network analysis using the generated secondary air system model.

The computer implemented method may further comprise performing computational fluid dynamic (CFD) analysis using the generated secondary air system model.

According to various examples there is provided a method comprising: receiving a secondary air system model generated in accordance with the computer implemented method as described in any of the preceding paragraphs; and manufacturing a secondary air system using the generated secondary air system model.

According to various examples there is provided a computer program that, when read by a computer, causes performance of the method as described in any of the preceding paragraphs.

According to various examples there is provided a non-transitory computer readable storage medium comprising computer readable instructions that, when read by a computer, cause performance of the method as described in any of the preceding paragraphs.

According to various examples there is provided apparatus for automatically designing a secondary air system for a gas turbine engine, the apparatus comprising a controller configured to: receive a geometry model of at least a part of a gas turbine engine, the geometry model including a plurality of data entities for a plurality of features of the gas turbine engine; define a plurality of cavities using the plurality of data entities of the geometry model; determine a subset of cavities of the plurality of cavities that define at least a part of the secondary air system; and generate a secondary air system model from the determined subset of cavities that define at least a part of the secondary airflow system.

The controller may be configured to generate node data entities from the subset of cavities to generate the secondary air system model by feature transformation.

The controller may be configured to generate link data entities that represent airflow paths coupled to the subset of cavities to generate the secondary air system model by feature transformation.

The controller may be configured to analyse geometrical data of the defined plurality of cavities to determine the subset of cavities that define at least a part of the secondary air system.

The controller may be configured to adapt the generated secondary air system model and automatically adapt the geometry model of the gas turbine engine to account for the adaptation of the secondary air system model.

The controller may be configured to adapt the geometry model of the gas turbine engine and automatically adapt the generated secondary air system model to account for the adaptation of the geometry model.

The controller may be configured to control output of a general assembly of the gas turbine engine including the generated secondary air system model.

The controller may be configured to perform flow network analysis using the generated secondary air system model.

The controller may be configured to perform computational fluid dynamic (CFD) analysis using the generated secondary air system model.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### BRIEF DESCRIPTION

Embodiments will now be described by way of example only, with reference to the Figures, in which:
Fig. 1 illustrates a sectional side view of a gas turbine engine;
Fig. 2 illustrates a schematic diagram of apparatus according to various examples;
Fig. 3 illustrates a schematic diagram of a data structure according to various examples;
Fig. 4 illustrates a schematic diagram of data entities, organised in a tree structure, for an intermediate pressure compressor blade disc according to an example;
Fig. 5 illustrates a graphical representation of the data entities illustrated in Fig. 4 according to an example;
Fig. 6 illustrates a schematic diagram of a data entity for a physical feature according to various examples;
Fig. 7 illustrates a flow diagram of a method of modelling a gas turbine engine according to various examples;
Fig. 8 illustrates a flow diagram of a method of preparing a model of a gas turbine engine according to various examples;
Fig. 9 illustrates a cross sectional side view diagram of a geometrical shape of aerodynamic boundaries according to various examples;
Fig. 10 illustrates the cross sectional side view diagram illustrated in Fig. 9 and a plurality of physical features;
Fig. 11 illustrates the cross sectional side view diagram illustrated in Fig. 10 and a further plurality of physical features;
Fig. 12 illustrates a general arrangement drawing produced by the methods described herein;
Fig. 13 illustrates a flow diagram of another method of modelling a gas turbine engine according to various examples;
Fig. 14 illustrates a flow diagram of a computer implemented method of automatically designing a secondary air system for a gas turbine engine according to various examples;
Fig. 15 illustrates a cross sectional side view of a part of a geometry model of a gas turbine engine according to various examples;
Fig. 16 illustrates a schematic diagram of a secondary air system of the part of the geometry model illustrated in Fig. 15;
Fig. 17 illustrates a flow diagram of a method of generating a secondary air system model according to various examples;
Fig. 18 illustrates a flow diagram of a method of manufacturing a secondary air system according to various examples;
Fig. 19 illustrates a taxonomy of node data entities according to various examples; and
Fig. 20 illustrates a taxonomy of link data entities according to various examples.

### DETAILED DESCRIPTION

In the following description, the terms 'connected' and 'coupled' mean operationally connected and coupled. It should be appreciated that there may be any number of intervening components between the mentioned features, including no intervening components.

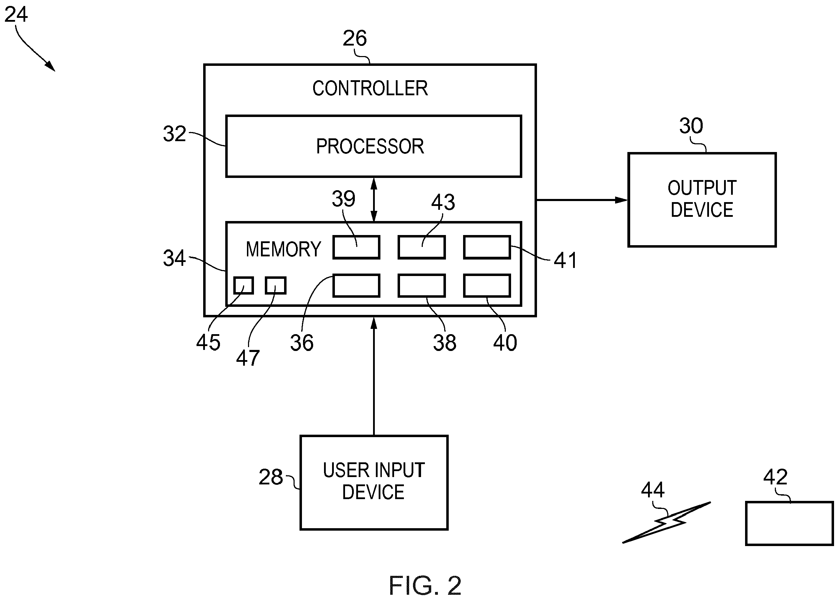

Fig. 2 illustrates an apparatus 24 including a controller 26, a user input device 28, and an output device 30. The apparatus 24 may be any computing device and may be located in a single location (for example, the apparatus 24 may be a personal computer (PC) located in a single room) or may be distributed across a plurality of locations (for example, the controller 26 may be located at least partly remotely (in another room, building, city, or country) from the user input device 28 and the output device 30).

In some examples, the apparatus 24 may be a module. As used herein, the wording 'module' refers to a device or apparatus where one or more features are included at a later time and, possibly, by another manufacturer or by an end user. For example, where the apparatus 24 is a module, the apparatus 24 may only include the controller 26, and the remaining features (such as the user input device 28 and the output device 30) may be added by another manufacturer, or by an end user.

The controller 26, the user input device 28, and the output device 30 may be coupled to one another via wireless links and may consequently comprise transceiver circuitry and one or more antennas. Additionally or alternatively, the controller 26, the user input device 28 and the output device 30 may be coupled to one another via wired links and may consequently comprise interface circuitry (such as a Universal Serial Bus (USB) socket). It should be appreciated that the controller 26, the user input device 28, and the output device 30 may be coupled to one another via any combination of wired and wireless links.

Input/output devices may be coupled to the apparatus 24 either directly or through intervening input/output controllers. Various communication adaptors may also be coupled to the controller 26 to enable the apparatus 24 to become coupled to other apparatus or remote printers or storage devices through intervening private or public networks. Non-limiting examples include modems and network adaptors of such communication adaptors.

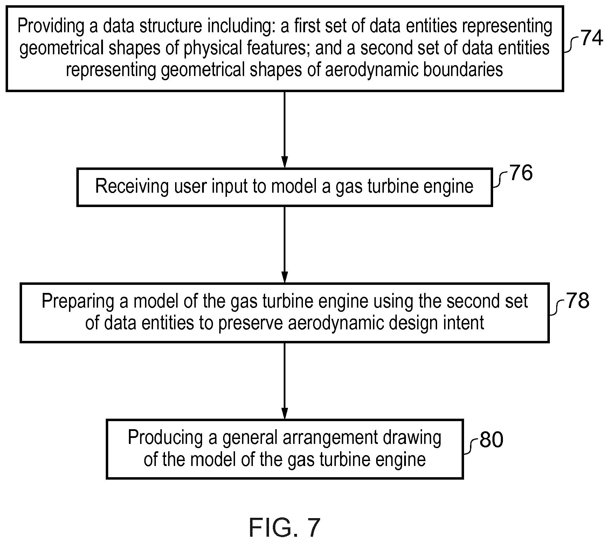

The controller 26 may comprise any suitable circuitry to cause performance of the methods described herein and as illustrated in Figs. 7, 8, 13, 14, 17 and 18. For example, the controller 26 may comprise: control circuitry; and/or processor circuitry; and/or at least one application specific integrated circuit (ASIC); and/or at least one field programmable gate array (FPGA); and/or single or multiprocessor architectures; and/or sequential/parallel architectures; and/or at least one programmable logic controllers (PLCs); and/or at least one microprocessor; and/or at least one microcontroller; and/or a central processing unit (CPU); and/or a graphics processing unit (GPU), to perform the methods. By way of another example, the controller 26 may comprise at least one processor 32 and at least one memory 34.

The memory 34 stores a computer program 36 comprising computer readable instructions that, when read by the processor 32, causes performance of the methods described herein, and as illustrated in Figs. 7, 8 and 13. The computer program 36 may be software or firmware, or may be a combination of software and firmware.

The memory 34 stores a data structure 38 that is described in greater detail in the following paragraphs. Generally, the data structure 38 includes a plurality of data entities from which a model of a gas turbine engine may be constructed.

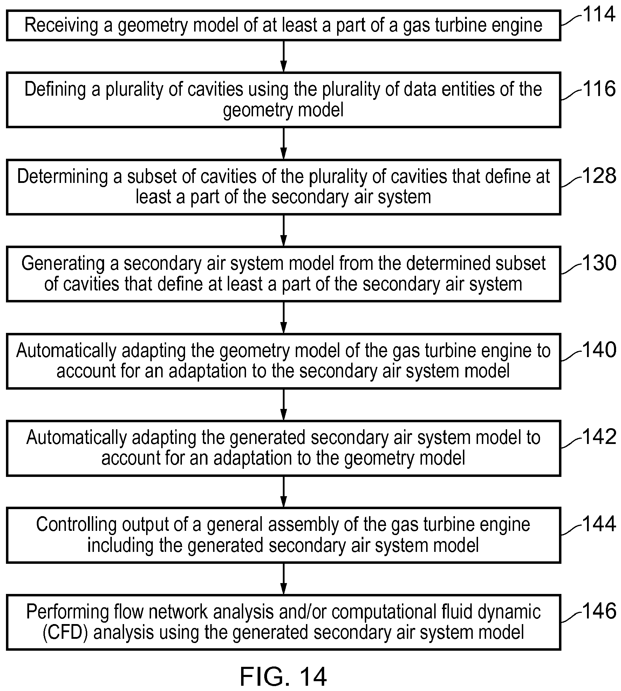

The memory 34 also stores a computer program 39 comprising computer readable instructions that, when read by the processor 32, causes performance of the methods described herein, and as illustrated in Figs. 14, 17 and 18. The computer program 39 may be software or firmware, or may be a combination of software and firmware.

Additionally, the memory 34 may store at least one geometry model 40 of a gas turbine engine generated by the apparatus 24 as described in the following paragraphs. In some examples, the memory 34 may not permanently store the model 40 of the gas turbine engine and instead, the model 40 may be built on demand and then stored (at least temporarily) by the memory 34.

Furthermore, the memory 34 may store at least one secondary air system model 41 generated by the apparatus 24 as described in the following paragraphs. In some examples, the memory 34 may not permanently store the secondary air system model 41 and instead, the secondary air system model 41 may be built on demand and then stored (at least temporarily) by the memory 34.

The processor 32 may be located at a single location (for example, within a housing or cover of a computer), or may be distributed across a plurality of locations (for example, the processor 32 may be distributed within a plurality of separate housings or covers of different computers, which may be located in the same room, or in different rooms, buildings, cities or countries). The processor 32 may include at least one microprocessor and may comprise a single core processor, or may comprise multiple processor cores (such as a dual core processor, a quad core processor, and so on).

The memory 34 may be located at a single location (for example, within a housing or cover of a computer), or may be distributed across a plurality of locations (for example, the memory 34 may be distributed within a plurality of separate housings or covers of different computers, which may be located in the same room, or in different rooms, buildings, cities or countries). The memory 34 may be any suitable non-transitory computer readable storage medium, data storage device or devices, and may comprise a hard disc and/or solid state memory (such as flash memory). The memory 34 may be permanent non-removable memory, or may be removable memory (such as a universal serial bus (USB) flash drive). The memory may include: local memory employed during actual execution of the computer program; bulk storage; and cache memories which provide temporary storage of at least some computer readable or computer usable program code to reduce the number of times code may be retrieved from bulk storage during execution of the code.

The computer program 36, and/or the data structure 38, and/or the computer program 39, and/or the model 40, and/or the secondary air system model 41 may be stored on a non-transitory computer readable storage medium 42. The computer program 36, and/or the data structure 38, and/or the model 40, and/or the secondary air system model 41 may be transferred from the non-transitory computer readable storage medium 42 to the memory 34. The non-transitory computer readable storage medium 42 may be, for example, a USB flash drive, an optical disc (such as a compact disc (CD), a digital versatile disc (DVD) or a Blu-ray disc). In some examples, the computer program 42 may be transferred to the memory 34 via a signal 44 (which may be a wireless signal or a wired signal).

The user input device 28 may include any suitable device or devices for enabling a user to control the apparatus 24. For example, the user input device 28 may include a keyboard, a keypad, a mouse, a touch pad, or a touch screen display. The controller 26 is arranged to receive control signals from the user input device 28.

The output device 30 may include any suitable device or devices for conveying information to a user. For example, the output device 30 may comprise a display (such as a liquid crystal display, or a light emitting diode display, or an active matrix organic light emitting diode display, or a thin film transistor display, or a cathode ray tube display) and/or a printing device (such as an inkjet printer or a laser printer for example). The controller 26 is arranged to provide a signal to the output device 30 to cause the output device 30 to convey information to the user.

### Geometry Model

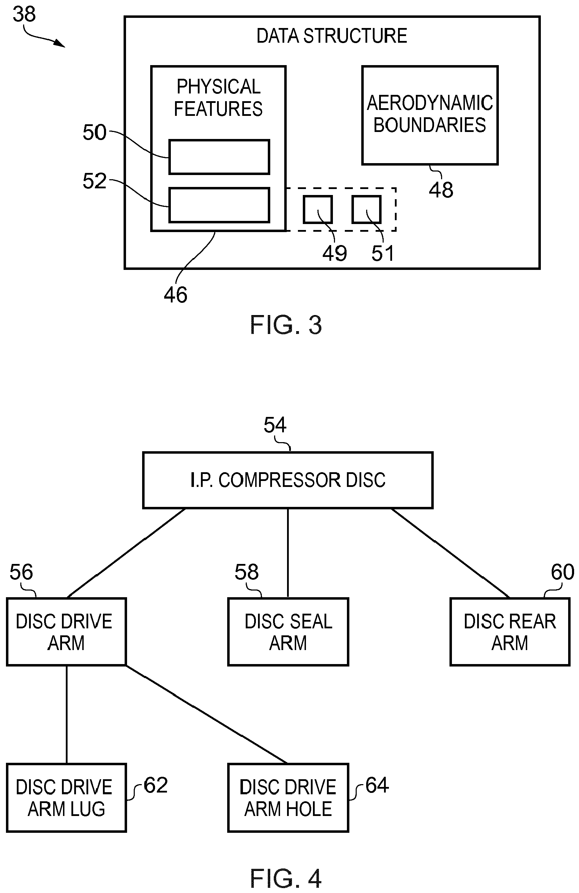

Fig. 3 illustrates a schematic diagram of the data structure 38 including a first set of data entities 46 and a second set of data entities 48. It should be appreciated that the data structure 38 may be coded in any suitable programming language. For example, the data structure 38 may be implemented as a library of object-oriented, hierarchical C++ classes.

The first set of data entities 46 represents geometrical shapes of physical features of a gas turbine engine. As used herein, a 'physical feature' is an assembly of components, a component, or a part of a component, of a gas turbine engine. In other words, a 'physical feature' may not correspond to a single, recognisable component of the gas turbine engine, and each component of a gas turbine engine may be reproduced by assembling one or more physical features.

Data entities in the first set of data entities 46 may be referred to as 'design-objects', which control the geometric representation of the physical features. The data structure 38 comprises a library of multiple data entities, at least some of which may be dedicated to a gas turbine engine application. The data entities 46 may have their own taxonomy and follow an internal hierarchy for acquiring, retaining, hiding and passing on various data.

The first set of data entities 46 may specify the allowable position or positions of physical features within the model of the gas turbine engine. For example, the first set of data entities 46 may specify one or more axial positions for a bearing within a model of the gas turbine engine. Consequently, the first set of data entities 46 may specify starting positions of components or assemblies of components within the model of the gas turbine engine.

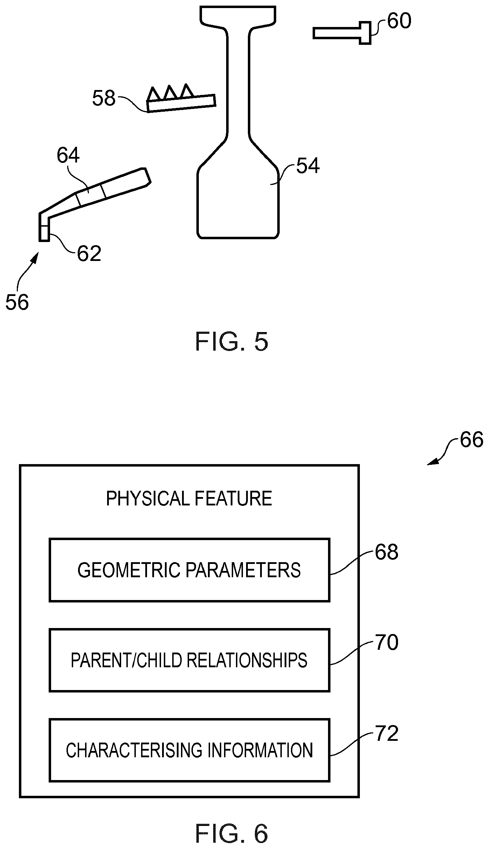

A single assembly of physical features may form a component of a gas turbine engine (as illustrated in Figs. 4 and 5 for an intermediate pressure compressor blade disc). Additionally, a plurality of assemblies of physical features may form a component of a gas turbine engine. For example, a seal may be formed by a rotatable assembly of physical features, and by a stationary assembly of physical features.

In some (but not all) examples, the first set of data entities 46 includes a first subset 50 and a second subset 52 of data entities. The first subset 50 includes at least one data entity for a physical feature having no functionality. That is, the one or more physical features in the first subset 50 may be considered building blocks that do not, in themselves, perform a function in the gas turbine engine. For example, shaft assemblies may be modelled using a plurality of such 'building block' physical features. The second subset 52 includes at least one data entity for a physical feature having functionality. That is, the one or more physical features in the second subset 52 may perform, in themselves, a function in the gas turbine engine. An example of a physical feature having functionality is a labyrinth seal where the parameters of the geometry may be dictated directly by the function of the feature.

In some examples, the first set of data entities 46 includes producing clearance data entities 49 and path data entities 51. All physical features in the feature taxonomy may not produce clearance and path objects. Furthermore, only some physical features may produce both clearance and path objects (hence, the use of the dotted lines in Fig. 3). These objects are explained later in greater detail in the context of secondary air system model generation.

As described in greater detail in the following paragraphs with reference to Figs. 4, 5 and 6, the first set of data entities 46 may be arranged in a tree structure having parent and child relationships. In such a tree structure, data entities for physical features located near the root of the assembly tree carry general information and represent high level assemblies, such as spools or modules (or even the whole engine). Such physical features at the root of the tree may also be referred to as 'top level or high abstraction level' physical features. Data entities for physical features located near the bottom of the assembly tree represent low abstraction level finer geometric details. Consequently, a child physical feature is an addition to the parent physical feature and the position of the child physical feature may be determined by its position relative to the parent physical feature, and by the position of the parent physical feature. Such physical features near the bottom of the assembly tree may be referred to as 'bottom level' physical features. The assembly tree may be executed by a method that follows a partial sequential or procedural approach.

In other examples, the first set of data entities 46 may not be arranged in a tree structure and instead, at least some of the first set of data entities 46 may be linked to one another. Such assembled data entities may be executed by means of constraint-based declarative statements. For example, one or more of the data entities 46 for a physical feature may include information that allows the physical feature to be positioned (or have its position, orientation, scale or any other geometric property modified according to certain criteria) relative to another physical feature.

It should be appreciated that in the above described examples, the data in the first set of data entities 46 may enable the mechanical design intent of a component or an assembly of components to be generated and preserved. In more detail, where data entities are linked to other data entities or are arranged in a tree structure, the relative positioning of the physical features within the component may be preserved during assembly of the model.

In further examples, the first set of data entities 46 may not be linked to one another or have a tree structure.

The data structure 38 also includes a second set of data entities 48 representing geometrical shapes of aerodynamic boundaries. As used herein, an 'aerodynamic boundary' indicates a boundary for the flow of fluid through the gas turbine engine. An 'aerodynamic boundary' represents the aerodynamic design intent for the gas turbine engine and may be a desired physical boundary (for example, a desired surface of a component positioned within the flow of fluid within the gas turbine engine) or may be a boundary within free space and having no physical surface (that is, an aerodynamic boundary may indicate a desired path within free space for the flow of fluid within the gas turbine engine). The geometrical shapes of aerodynamic boundaries may include one or more of: gas turbine engine annulus lines; an aerofoil; an aperture through at least one physical feature; and a clearance between physical features.

Fig. 4 illustrates a schematic diagram of data entities, illustratively organised in a tree structure, for an intermediate pressure compressor disc according to an example. In more detail, the diagram illustrates an intermediate pressure (IP) compressor disc data entity 54, a disc drive arm data entity 56, a disc seal arm data entity 58, a disc rear arm data entity 60, a disc drive arm lug data entity 62, and a disc drive arm hole data entity 64. It should be appreciated that the data entities 54, 56, 58, 60, 62, 64 are a subset of the data structure 38 for the gas turbine engine.

The tree structure is arranged so that the IP compressor disc data entity 54 is the root of the tree structure and is the parent physical feature to the disc drive arm data entity 56, the disc seal arm data entity 58, and the disc rear arm data entity 60. The disc drive arm data entity 56 is the parent physical feature to the disc drive arm lug data entity 62 and to the disc drive arm hole data entity 64.

Fig. 5 illustrates a graphical representation of the intermediate pressure (IP) compressor blade disc data entity 54, the disc drive arm data entity 56, the disc seal arm data entity 58, the disc rear arm data entity 60, the disc drive arm lug data entity 62, and the disc drive arm hole data entity 64.

Fig. 6 illustrates a schematic diagram of a data entity 66 for a physical feature according to various examples. The data entity 66 includes geometric parameters 68, parent/child relationship data 70, and characterizing information 72.

The geometric parameters 68 define the shape of the physical feature. For example, where the physical feature is a disc, the geometric parameters 68 define the radius and depth of the disc. The geometric parameters 68 enable the controller 26 to present the physical feature via the output device 30 and graphically represent the physical feature. Where the physical feature is an aperture or a cavity in a parent physical feature, the geometric parameters 68 may define the aperture or cavity as the removal of material from the parent physical feature.

When a data entity 66 is initiated and geometric parameters are defined, the controller 26 may advantageously perform intra-data structure validations. For example, the controller 26 may validate the dimensions of the geometric parameters, and for some data entities, the controller 26 may also check the type of parent data entity and the self-attachment location.

The parent/child relationship data 70 identifies the parent physical feature and/or the child physical feature(s) for that particular physical feature. The parent/child relationship data 70 may also define the intended positioning between the physical feature and the parent physical feature and/or the child physical feature. The final position of a physical feature may be altered by the user or by the apparatus 24 according to certain criteria, which are described in greater detail in the following paragraphs.

The characterising information 72 includes data that characterises the physical feature and/or the data entity 66 for the physical feature. For example, the characterising information 72 may include a bill of materials for the physical feature, manufacturing instructions, modification history for the data entity 66, and/or the designer's notes.

The operation of the apparatus 24 in modelling at least a part of a gas turbine engine is described in the following paragraphs with reference to Fig. 7.

At block 74, the method includes providing the data structure 38 including the first set of data entities 46 representing geometrical shapes of physical features, and the second set of data entities 48 representing geometrical shapes of aerodynamic boundaries. For example, the data structure 38 (or a part of the data structure 38) may be provided by a user of the apparatus 24 who uses the apparatus 24 (or another computing device) to enter data for new data entities (either in the first or second set of data entities 46, 48) to generate the data structure 38. By way of another example, the data structure 38 (or a part of the data structure 38) may be provided by the controller 26 for loading or accessing the data structure 38 from the memory 34.

At block 76, the method includes receiving user input to model a gas turbine engine. For example, the controller 26 may receive a control signal from the user input device 28 that directly initiates modelling of a gas turbine engine (for example, the user 'presses' a button displayed in a graphical user interface that commences modelling of the gas turbine engine). By way of another example, the controller 26 may receive a control signal from the user input device 28 that indirectly initiates modelling of a gas turbine engine (for example, the user loads the modelling software that then automatically models a gas turbine engine).

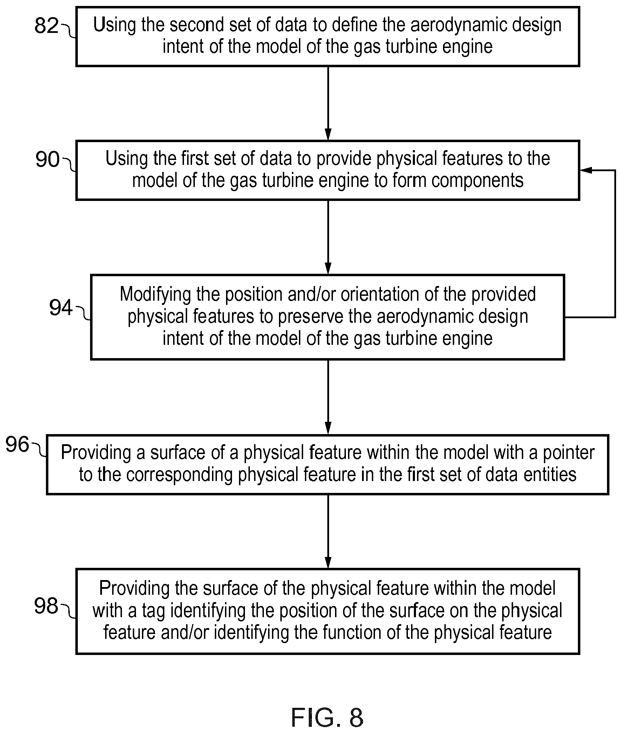

At block 78, the method includes preparing a model of the gas turbine engine using the second set of data entities 48 to preserve the aerodynamic design intent. An example of the methodology within block 78 is illustrated in Fig. 8 and described in the following paragraphs. Generally, in block 78 the method may include positioning physical features in the model so that they are not located within the aerodynamic boundaries defined by the second set of data entities 48 (and therefore do not restrict the desired flow of fluid through the gas turbine engine). Consequently, the aerodynamic design intent may be preserved by re-positioning physical features so that they do not occupy any space within the aerodynamic boundaries defined by the second set of data entities. In some examples, the aerodynamic design intent may be preserved by re-positioning physical features in the model so that they occupy less space within (but are still positioned within, if only to a minimal extent) the aerodynamic boundaries defined by the second set of data entities

Upon completion of block 78, the controller 26 may store the model 40 in the memory 34. The model 40 may then be used to simulate the operation of the gas turbine engine. In some examples, the model 40 may be a model of a part of a gas turbine engine (for example, a compressor module of a gas turbine engine). In other examples, the model 40 may be a model of the whole of the gas turbine engine (that is, the model 40 is a model of an in-service gas turbine engine mounted on a wing of an aircraft).

At block 80, the method includes producing a general arrangement drawing of the model of the gas turbine engine prepared in block 78. For example, the controller 26 may control a display of the output device 30 to display a general arrangement drawing of the prepared model. By way of another example, the controller 26 may control a printer of the output device 30 to print a general arrangement drawing on a printing medium (such as paper).

At least a part of a gas turbine engine may be manufactured using the model 40 generated in accordance with the above described method. Furthermore, at least a part of a gas turbine engine may be manufactured using the general arrangement drawing produced at block 80.

Fig. 8 illustrates a flow diagram of a method of preparing a model of a gas turbine engine according to various examples. The blocks illustrated in Fig. 8 may form at least a part of block 78 illustrated in Fig. 7.

At block 82, the method includes using the second set of data 48 to define the aerodynamic design intent of the model of the gas turbine engine. In some examples, a user may directly select one or more geometrical shapes from the second set of data 48 via a graphical user interface. In other examples, a user may provide a desired set of parameters (for example, a desired size for the gas turbine engine) to the controller 26 via the user input device 28, and the controller 26 may then select one or more geometrical shapes from the second set of data 48 that most closely match the desired set of parameters.

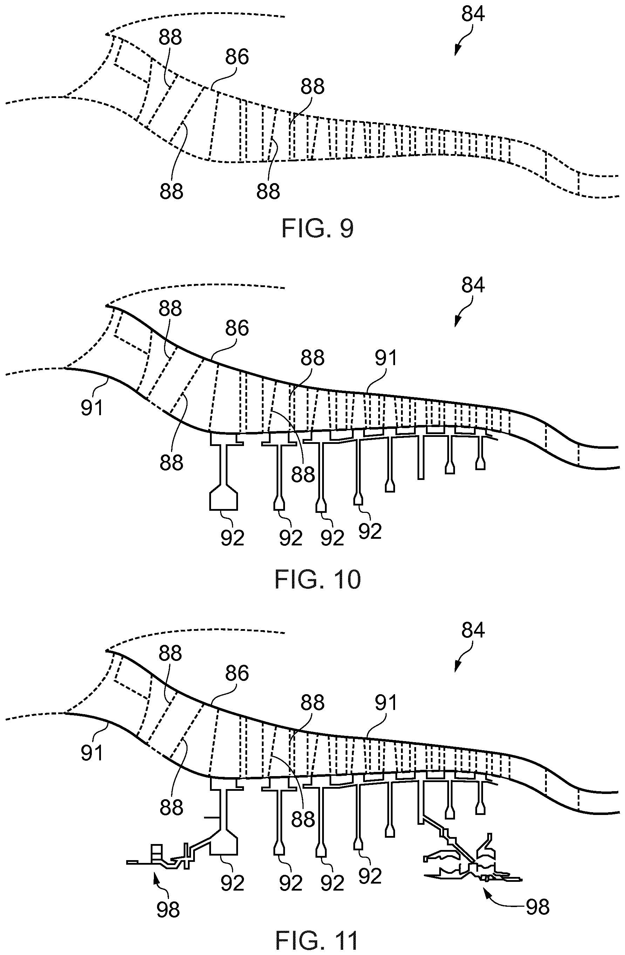

By way of an example, Fig. 9 illustrates a cross sectional side view diagram of a model including the geometrical shape 84 of the aerodynamic boundaries of a compressor module of a gas turbine engine. The geometrical shape 84 comprises a plurality of dotted lines 86 that represent the aerodynamic boundaries of the compressor main fluid flow passage. The geometrical shape 84 also comprises a plurality of dotted lines 88 that represent the aerodynamic boundaries of leading and trailing edges of compressor blades.

At block 90, the method includes using the first set of data to provide physical features to the model of the gas turbine engine to form components. The controller 26 may provide physical features to the model in order of their proximity to the dotted lines 86, 88 of the geometrical shape 84. For example (and with reference to Fig. 10), the controller 26 may provide the geometrical shape 84 of the compressor with physical features from the first set of data entities 46 to form a plurality of end walls 91 and compressor discs 92 within the model. The physical features provided to the model may include physical features (not having functionality) from the first subset 50 and physical features (having functionality) from the second subset 52.

At block 94, the method includes modifying the position and/or orientation and/or shape of at least one provided physical feature to preserve the aerodynamic design intent of the model of the gas turbine engine. For example, the controller 26 may determine that a compressor disc extends over one or more of the dotted lines 86, 88 within the model, and may then re-position the compressor disc to not extend over the dotted line (or dotted lines) and thereby preserving the aerodynamic design intent of the compressor. In some examples, the controller 26 may determine that a physical feature extends over one or more dotted lines by comparing the locations of the perimeter of the physical feature in a coordinate system with the locations of the one or more dotted lines in the coordinate system.

Where the physical features are organised within a tree structure in the data structure 38, parent and child physical features may also be re-positioned by the controller 26 when a physical feature is moved in order to preserve the aerodynamic design intent. In particular, once the controller 26 has determined that a physical feature is to be moved, the controller 26 uses the parent/child relationship data 70 to determine whether a parent or child feature should also be moved a corresponding distance to preserve the geometrical shape and hence the mechanical design intent and connectivity of that component within the model.

For example, where the controller 26 has determined that an intermediate pressure compressor disc 54 is to be moved within the model, the controller 26 may use the parent/child relationship data 70 of the disc data entity 54 to determine that the disc drive arm 56, the disc seal arm 58, the disc rear arm 60 are also to be moved. Since the disc drive arm 56 has the child physical features: disc drive arm lug 62; and the disc drive arm hole 64, the controller 26 may also re-position the disc arm lug 62 and the disc drive arm hole 64 within the model using the parent/child relationship data 70 of the disc drive arm 56 to preserve the geometrical shape of the compressor disc.

Where the controller 26 determines that no further physical features are to be provided to the model, the method moves to block 96.

Where the controller 26 determines that further physical features are to be provided to the model (for example, child features of physical features already within the model), the method returns to block 90. For example, as illustrated in Fig. 11, the controller 26 may provide additional physical features 98 to the model after block 94 has been performed.

At block 96, the method may include providing a surface of a physical feature within the model with a pointer to the corresponding physical feature data entity in the first set of data entities 46. For example, the surface of the compressor disc 92 in the model may be provided with a pointer to the IP compressor disc data entity 54. The pointer may be an address that identifies the location of the corresponding data entity within the data structure 38.

An advantage of block 96 is that it may allow surfaces to be identified automatically when an analysis needs to be performed for that component. As an example, one may consider the case of a flow analysis on a cavity in the internal volume of the compressor. Such an analysis may require data, such as roughness. Then, if the analysis program has access to the model built according to the present disclosure, the analysis program may be able to interrogate the surface and retrieve the bill of materials and manufacturing instructions for the corresponding component, and hence the roughness.

At block 98, the method may include providing the surface of the physical feature within the model with a tag identifying the position of the surface on the physical feature and/or identifying the function of the physical feature. For example, the controller 26 may provide at least one surface of the compressor disc 92 with a tag that identifies the position of that surface on the disc and/or identifies that the function of the compressor disc is to rotate.

The method includes a distinctive capability to identify and assign rotational speed boundary conditions to each surface of physical features. The method automatically processes all surfaces (or edges in two dimensional domain) of all physical feature polygons and then segregates them to create 'surface groupings' based on the high abstraction level 'spool' feature to which the physical features are connected to. The spool feature holds the rotational speed boundary condition for the module of the gas turbine engine that it represents. The lower abstraction level features may enquire rotational speed to the spool feature and the rotational speed boundary condition is assigned to some or all surfaces of physical feature depending on their surface grouping. For example, the method may identify that the surfaces representing knives of labyrinth seal physical feature are a part of surface grouping that receives a finite rotational speed from its corresponding spool feature, whereas the surfaces representing stator part of labyrinth seal physical feature are a part of surface grouping that get null rotational speed or stationary frame speed from its corresponding spool feature.

This exclusive characteristic of the method is advantageous for automatic and consistent application of rotational speed boundary condition to all solid surfaces of cavity polygons, which if applied manually may be very cumbersome, if not impossible.

An advantage of block 98 is that it may enable the identification of surfaces of a physical feature. For the purpose of programs accessing the database, such a tag contains and preserves a link to the surfaces of physical feature data entity. The additional tag also allows a program to identify "which" surface on that physical feature has been accessed.

Once the model has been completed and stored in the memory 34, the method may move to block 80 and the apparatus 24 may produce a general arrangement drawing of the model of the whole of the gas turbine engine. In some examples, the apparatus 24 may produce a general arrangement drawing of a model of only a part of the gas turbine engine.

The method may additionally validate inter-data entity relationships and geometric assembly relationships such as attachment pre-conditions, interaction and data transfer and geometry interference. The method may then highlight incorrect and/or impermissible types of attachments and geometric interferences.

It should be appreciated that at least some of the blocks 74, 76, 78, 80, 82, 90, 94, 96, 98 may be controlled or initiated by the controller 26. Additionally or alternatively, at least some of the blocks 74, 76, 78, 80, 82, 90, 94, 96, 98 may be controlled or initiated by a human operator of the apparatus 24. Additionally or alternatively, at least some of the blocks 74, 76, 78, 80, 82, 90, 94, 96, 98 may be controlled or initiated by another program which has access to a representation of gas turbine geometry.

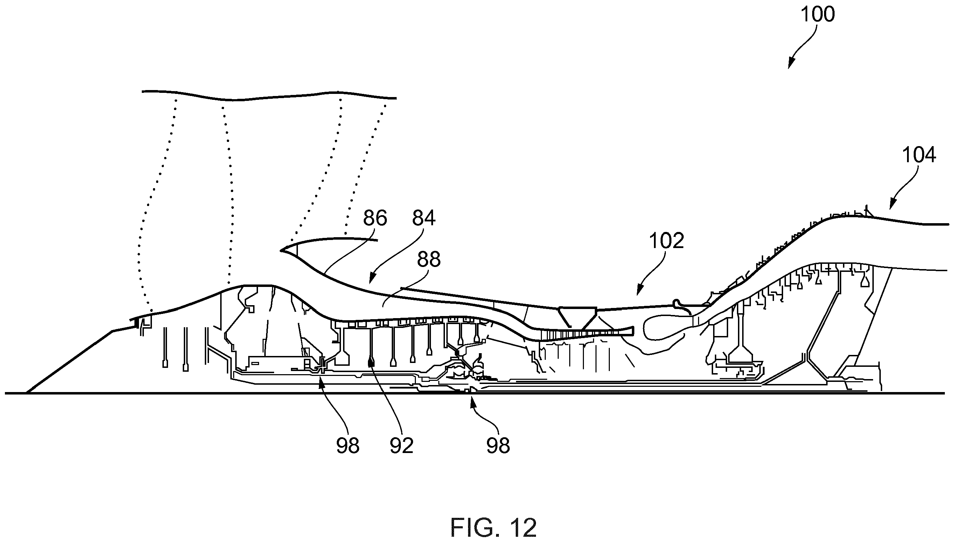

Fig. 12 illustrates a general arrangement drawing 100 produced by the method described above. The general arrangement drawing includes the compressor section illustrated in Figs. 9 to 11, and also includes a combustor 102 and a turbine section 104.

The apparatus 24 and above described method may be advantageous in that the use of the second set of data entities enables a model of a gas turbine engine to be prepared that preserves the aerodynamic design intent of the designer of the model. This may enable the gas turbine engine to be modelled from the 'top down'. In other words, the model may be prepared by starting with a functional design (that is, the geometrical shapes of the aerodynamic boundaries), followed by a coarser to fine design process (that is, primary or core physical features at the root of the tree structure, followed by successive child physical features that fill in further geometric features).

Additionally, the apparatus 24 and the above described method may be advantageous in that since the data structure 38 may have a tree structure (or since the data entities in the data structure 38 are linked as described above), changes made to the position and/or orientation of a parent physical feature may carry through to successive child physical features. This may reduce the human resources required for preparing the model of the gas turbine engine.

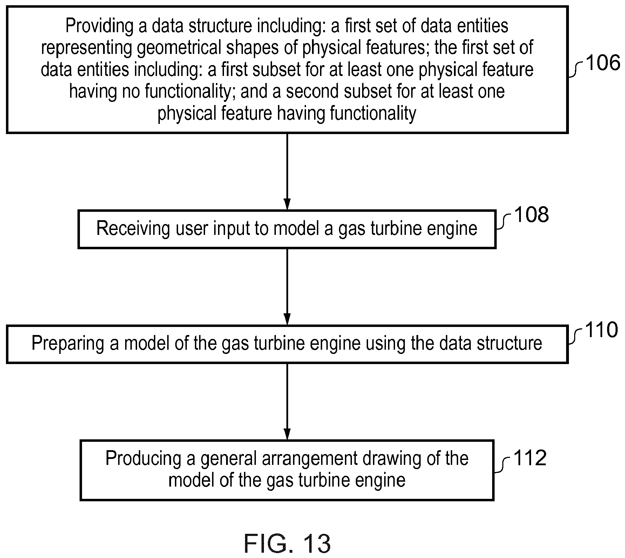

Fig. 13 illustrates a flow diagram of another method of modelling a gas turbine engine according to various examples. In these examples, the data structure 38 includes the first and second subset 50, 52 of first data entities 46, but may or may not include the second set of data entities 48.

At block 106, the method includes providing a data structure including a first set of data entities representing geometrical shapes of physical features. The first set of data entities comprises: a first subset for at least one physical feature having no functionality; and a second subset for at least one physical feature having functionality. For example, the data structure 38 (or a part of the data structure 38) may be provided by a user of the apparatus 24 who uses the apparatus 24 (or another computing device) to enter data for new data entities in the data structure 38. By way of another example, the data structure 38 (or a part of the data structure 38) may be provided by the controller 26 loading or accessing the data structure 38 from the memory 34.

At block 108, the method includes receiving user input to model a gas turbine engine. For example, the controller 26 may receive a control signal from the user input device 28 that directly initiates modelling of a gas turbine engine (for example, the user 'presses' a button displayed in a graphical user interface that commences modelling of the gas turbine engine). By way of another example, the controller 26 may receive a control signal from the user input device 28 that indirectly initiates modelling of a gas turbine engine (for example, the user loads the modelling software that then automatically models a gas turbine engine).

At block 110, the method includes preparing a model of the gas turbine engine using the first set of data entities 46 (and optionally the second set of data entities 48). In more detail, the model of the gas turbine engine may be prepared using physical features having no functionality (that is, physical features that are building blocks (or primary or core physical features) that do not perform a function in themselves) and using physical features that have functionality (that is, the physical features in the first and second subsets 50, 52 of the first set of data entities 46).

At block 112, the method includes producing a general arrangement drawing of the model of the gas turbine engine prepared in block 110. For example, the controller 26 may control a display of the output device 30 to display a general arrangement drawing of the prepared model. By way of another example, the controller 26 may control a printer of the output device 30 to print a general arrangement drawing on a printing medium (such as paper).

It should be appreciated that at least some of the blocks 106, 108, 110, 112 may be controlled or initiated by the controller 26. Additionally or alternatively, at least some of the blocks 106, 108, 110, 112 may be controlled or initiated by a human operator of the apparatus 24.

### Creation of Secondary Air System Model by Feature Transformation

The generation of the secondary air system model 41 is described in the following paragraphs.

Fig. 14 illustrates a flow diagram of a computer implemented method of automatically designing a secondary air system model 41 for a gas turbine engine in accordance with various examples. The computer implemented method is described in relation to the apparatus 24 illustrated in Fig. 2. However, it should be appreciated that the generation of the secondary air system model 41 and the generation of the geometry model 40 may be performed by separate apparatus having different and separate controllers.

At block 114, the method includes receiving a geometry model of at least a part of a gas turbine engine. In some examples, the method may include receiving a geometry model of the whole of a gas turbine engine. In various examples, the controller 26 may read the geometry model 40 stored in the memory 34 of the apparatus 24. In other examples, the apparatus 24 may receive a geometry model from an apparatus different to, and separate from, the apparatus 24.

The geometry model includes a plurality of data entities for a plurality of features of the gas turbine engine. For example, the geometry model 40 stored in the memory 34 may include the data structure 38 including the set of data entities 46 that represent geometrical shapes of physical features of the gas turbine engine (as illustrated in Fig. 3) and the set of data entities 48 that represent aerodynamic boundaries of the gas turbine engine.

At block 116, the method includes defining a plurality of cavities using the plurality of data entities of the received geometry model. For example, the controller 26 may define a plurality of cavities using the plurality of data entities 46 in the data structure 38.

In more detail, the controller 26 may first identify the surfaces of physical features within the geometry model 40 and then determine which surfaces define cavity polygons within the geometry model 40. The controller 26 may also determine whether the clearance entities between surfaces exist that define the flow boundaries of the cavity polygons. The controller 26 may also identify whether path entities are attached to the surfaces of cavity polygons.

The objects termed as 'clearance' 49 are generated by both axisymmetric type and non-axisymmetric type (but not all) physical features 46 (such as physical features representing orifices, seals, bearings and do on) in the present gas turbine feature taxonomy. Clearance locations and their dimensions are either provided by a human operator (such as measuring clearances) or are automatically produced by the physical features at predetermined locations. Such clearances are generally positioned perpendicular to the direction of flow.

Some axisymmetric type features (such as labyrinth seals and bearings) produce clearance(s) at the boundaries of their physical domain. The non-axisymmetric type features representing various non-axisymmetric components such as orifices of different shapes, bleed slots, pipes, hydraulic junctions, and so on may produce their own clearance(s) at predetermined locations within the physical domain of the represented component. Measuring clearance is defined by the human operator and is usually arranged to define the flow boundaries of open cavities at the locations such as gaps between blade platforms, brush seals. Measuring clearances are also advantageous for splitting large air cavities at locations such as disc bores, annular orifices.

The objects termed as 'path' 51 are generated by some (but not all) physical features 46 in the present gas turbine feature taxonomy. Path represents hydraulic passages within the gas turbine engine and is oriented in direction parallel to flow. Their starting location, track and end location can be defined by user. Certain physical features such as hydraulic junctions may also produce their own paths. Path objects 51 are advantageous for defining various hydraulic connections in the gas turbine engine such as blade cooling passages, internal passages within hollow service struts and hydraulic plumbing connections.

The controller 26 may then define the plurality of cavities by selecting those surfaces that define solid walls of cavity polygons and by selecting those clearances that define flow boundaries. The plurality of defined cavities may then be stored as one or more cavity data entities 43 in the memory 34.

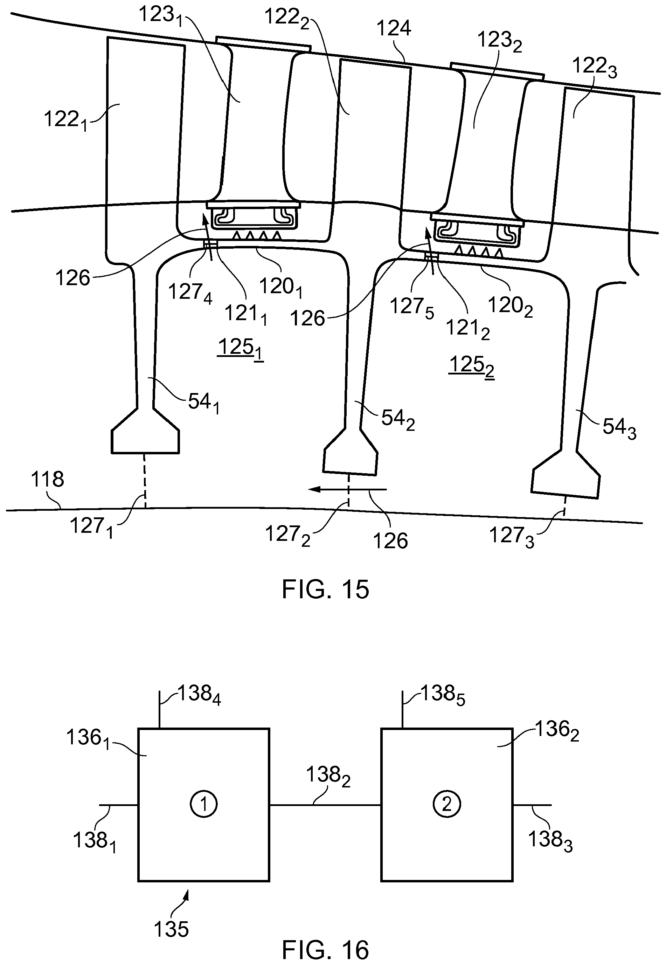

An example of defining a plurality of cavities is described in the following paragraphs with reference to Fig. 15.

Fig. 15 illustrates a cross sectional side view of a part of a geometry model of a gas turbine engine including a first compressor disc 54₁, a second compressor disc 54₂, a third compressor disc 54₃, a shaft 118, a first disc arm 120₁, a second disc arm 120₂, a first disc arm hole 121₁, a second disc arm hole 121₂, a first compressor rotor blade 122₁, a second compressor rotor blade 122₂, a third compressor rotor blade 122₃, a first compressor stator blade 123₁, a second compressor stator blade 123₂, and a casing 124. Arrow 126 is illustrated to represent the flow of air within the gas turbine engine.

The controller 26 may first identify surfaces of physical features within the geometry model 40 and then determine which surfaces define cavity polygons within the geometry model 40. The controller 26 may also determine whether clearances between surfaces close the cavity polygon and hence define the flow boundaries of the cavity polygons. The controller 26 may define a first cavity 125₁ using surfaces of the first compressor disc 54₁, the first disc arm 120₁, the clearance 127₄ created by first disc arm hole feature 121₁, the second compressor disc 54₂, the shaft 118, a measuring clearance defining first flow boundary 127₁, and a measuring clearance defining second flow boundary 127₂. The controller 26 may define a second cavity 125₂ using surfaces of the second compressor disc 54₂, the second disc arm 120₂, the clearance 127₅ created by second disc arm hole feature 121₂, the third compressor disc 54₃, the shaft 118, the measuring clearance defining second flow boundary 127₂, and a measuring clearance defining third flow boundary 127₃. The controller 26 may use a polygon slitting algorithm to define the cavities 125₁ and 125₂.

By way of an example, the polygon slitting algorithm may extract the cavity polygons from the received geometry model. By the virtue of feature tree construction method and the Boolean operations performed to assemble the polygons of physical features and the methods implemented in polygon slitting algorithm, the controller 26 creates two types of polyline orientations for slitted cavity polygons. In the first type of cavity polygons, the polylines are arranged in clockwise direction and they produce positive area polygons. On the other hand, polylines of most cavity polygons are arranged in anti-clockwise direction and hence they produce negative area polygons.

The polygon slitting algorithm may assign a global number to each cavity and to each hydraulic junction and the polygon slitting algorithm maintains the global numbers by storing the global numbers in a table (which may be stored in the memory 34). The table may contain global numbers of all clearances and cavities adjacent to clearances. This table may be amended to include global numbers of paths connecting distant cavities and hydraulic junctions. The table may be referred to as an initial link-table.

Returning to Fig. 14, at block 128, the method includes determining a subset of cavities that define at least a part of the secondary air system. The controller 26 may determine the subset of cavities by identifying those cavities that do not define a part of the secondary air system and then filtering them out from the cavities defined at block 116.

For example, the controller 26 may determine if a cavity is ventilated by a hydraulic connection, such as a hole, pipe, junction or just a gap between the components. If the controller 26 finds cavities that are not ventilated; those cavities are filtered out and are not considered for further secondary air system analysis.

As described in the preceding paragraphs, during the polygon slitting process, the polygon slitting algorithm creates an outermost polygon around the selected domain of the flow network model. This polygon is the outer envelope of the flow network domain and hence is not considered as a cavity. This outermost polygon, characterised by its positive area, is filtered out from the remaining negative area polygons, which represent the actual engine cavities. The controller 26 updates the link-table to reflect these changes.

Further, one or more cavities extracted from the geometry model may not be air cavities. Some cavities represent bearing chambers, which are the enclosures of bearings, gearboxes and so on. These cavities are filled with air-oil mist flows. The controller 26 may identify such cavities to assign the specific type of fluid flow characteristics during downstream analysis. The controller 26 may remove these cavities from the link-table where their analysis is out of scope.

By way of another example, the controller 26 may determine that a bearing chamber cavity is not part of the secondary air system because a bearing chamber cavity includes surfaces of bearing-type features that are not part of the secondary air system.

The link-table is modified as a consequence of removal of unwanted cavities. After removing outermost cavity polygon and other unwanted cavity polygons, the clearances connecting to the removed cavities are considered as the boundaries of the air system network model. According to the terminology of the present network model generation method in this example, these flow boundaries are said to be connected to the outer world. The controller 26 updates the link-table to reflect these changes.

A similar procedure is employed for identifying the air cavities created by geometry features representing various air system components such as, seal-type feature, two-sided type feature, one-sided type feature and coupling-type feature. The polygon of these cavities is defined by the clearances created by the same engendering physical feature and hence the connectivity information between that cavity and adjacent cavities exist in the link-table. The cavities created by these features are not required in the secondary air system analysis and hence those are replaced by appropriate type of link data entities, explained later. These cavities may not be completely removed from the flow network modeller and may be maintained in the form of link polygons. The controller 26 updates the link-table after removing the internal cavities of air system components to re-establish the connectivity in flow network model.

At block 130, the method includes generating a secondary air system model 41 from the determined subset of cavities that define at least a part of the secondary air system. The controller 26 may store the generated secondary air system model 41 in the memory 34.

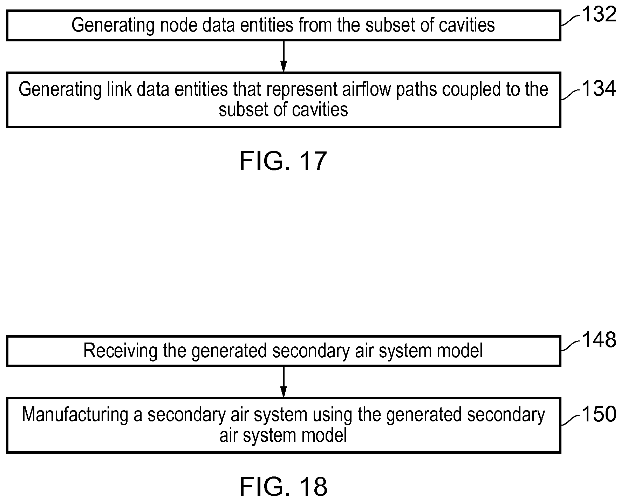

A secondary air system model may be generated in accordance with the computer implemented method illustrated in Fig. 17 and may include node data entities 45 and at least one link data entity 47.

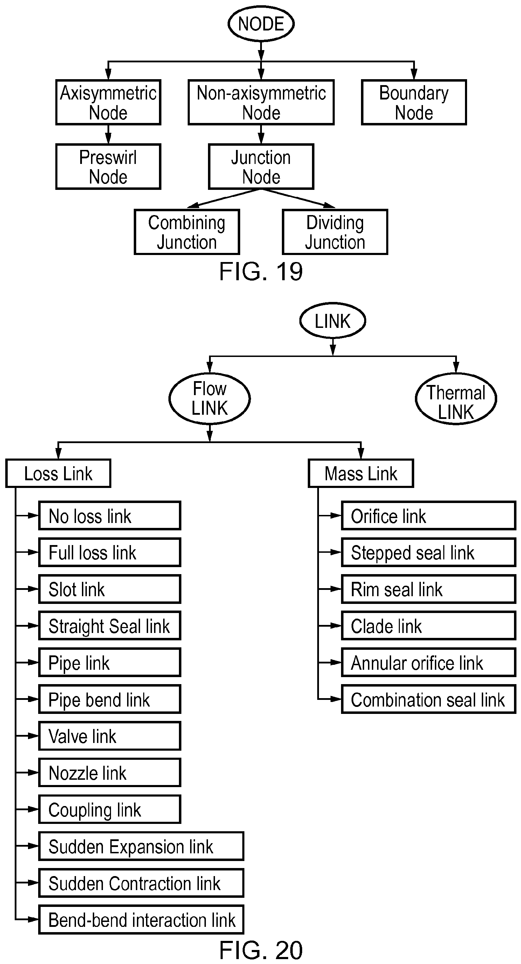

At block 132, the method includes generating node data entities 45 from the subset of cavities that define at least a part of the secondary air system. A node data entity is an abstract entity that represents a flow cavity having a finite volume. A node data entity may include (but is not limited to) the following variables: type of node (for example, flow node or thermal node); global node number; total volume of represented cavity; number of connections (including inflow and outflow); types and positions of links attached to the node; identification of other nodes attached to the node via links; geometry variables; number of solid walls and the rotational speeds of the walls; definition of cavity polygon. Fig. 19 illustrates the taxonomy of node data entities 45 according to various examples. The node data entities 45 define the type of flow and pressure losses for an associated cavity. For example, axisymmetric and non-axisymmetric nodes are created to represent axisymmetric and non-axisymmetric cavities respectively.

The controller 26 is configured to analyse the plurality of cavities 43 to identify the types of nodes in the geometry model 40. The types of nodes may alternatively be identified by the controller 26 by analysing the feature headings of clearances that define the plurality of cavities 43. For example, the pre-swirl cavity node and its type may be identified from the heading of a non-axisymmetric type physical feature that creates a clearance representing pre-swirl nozzles. The controller 26 is configured to then extract the variables of the node data entities 45 from the geometry model 40.

At block 134, the method includes generating link data entities 47 from the subset of clearances and paths in the final link-table that represent airflow paths coupled to the subset of cavities. A link data entity is an independent data structure that represents flow paths connecting cavities. A link entity contains the geometric description of an air system component and maintains the parameters to construct 1 D loss model or to create mesh for 2D or 3D analyses. A link data entity may include (but is not limited to) the following variables: link name; number of stations in a link; type of flow loss represented by the link; flow areas; geometry variables; shape or path of geometry feature associated with the link; link polygon(s). Fig. 20 illustrates the taxonomy of link data entities 47 according to various examples. A link data entity has two types; mass-type links and loss-type links. Mass-type links predict mass flow rate passing through a flow link (such as an orifice). Loss-type links predict total pressure drop in flow passing through a constriction (such as labyrinth seal). The present method is configured to further allow coupling of multiple link entities in series.

By the virtue of geometric information contained within the link data entities 47, the link data entities 47 are enabled to define loss models for the physical features (for example, pipe bends, valves, area enlargement and contractions, pipe orifices and so on) that define the conduits coupled to the cavities. The controller 26 is configured to generate the link data entities 47 using the geometry model 40 of the gas turbine engine. A human operator may associate a link type with a loss model to enable an air system modeller determine using the information within link data entity during numerical computations.

Fig. 16 illustrates a schematic diagram of a secondary air system model 135 of the part of the geometry model illustrated in Fig. 15. The secondary air system model 135 includes a first node 136₁, a second node 136₂. The first node 136₁ is generated from the first cavity 125₁, the second node 136₂ is generated from the second cavity 125₂. The first node 136₁ is connected to the outer world through links 138₁, 138₄ and to the second node 136₂ through link 138₂. The links 138₁, 138₂ and 138₄ are generated from flow boundaries defined by clearances 127₁, 127₂ and 127₄, respectively. Similarly, the second node 136₂ is connected to the first node 136₁ through link 138₂ and to the outer world through links 138₃ and 138₅. The links 138₂, 138₃ and 138₅ are generated from flow boundaries defined by clearances 127₂, 127₃ and 127₅, respectively.

The secondary air system model generated through blocks 114, 116, 128, 130 may be advantageous in that the secondary air system model is automatically generated from the geometry model 40 and may be used directly by flow network modelling software. For example, the node and link data entities, 45 and 47, generated at blocks 132, 134 may be in a data format that is directly useable by flow network modelling software. The automatic generation of the secondary air system model may increase the accuracy of the secondary air system model due to the reduction or elimination of human input to the secondary air system model. Furthermore, the automatic generation of the secondary air system model may be performed more quickly by the apparatus 24 than by a human manually creating a secondary air system model.

Since the secondary air system model 41 is generated from the geometry model 40, a change to one of the models 40, 41 may be used to automatically effect a corresponding change in the other of the models 40, 41.

Returning to Fig. 14, at block 140, the method may include automatically adapting the geometry model 40 of the gas turbine engine to account for an adaptation to the secondary air system model 41. For example, an operator may use the user input device 28 to adapt the secondary air system model 41 to increase the flow of air through the link 138. The controller 26 may determine which physical feature data entities 46 define the link 138 and then adapt the geometry model 40 to increase the area of the flow boundary 127₂ (for example, by modifying the inner radius of the second compressor disc 54₂) to account for the adaptation in the secondary air system model 41.

At block 142, the method may include automatically adapting the generated secondary air system model 41 to account for an adaptation to the geometry model 40. For example, an operator may use the user input device 28 to adapt the geometry model 40 to increase the depth of the first disc arm 120₁. The controller 26 may then determine which data entities of the generated secondary air system 41 are defined by the first disc arm 120₁, and then adapt the generated secondary air system model 41 to reduce the cross-sectional area of the first node 136₁ and to increase the length of link entity 138₄ representing first disc arm hole 121₁ to account for the adaptation in the geometry model 40.

Blocks 140 and 142 may be advantageous in that they may be significantly quicker, more consistent, more robust (that is, less prone to human errors) than manual model generation methods. Consequently, blocks 140 and 142 may improve standardization of generated secondary air system models.

At block 144, the method may include controlling output of a general assembly of the gas turbine engine including the generated secondary air system model 41. For example, the controller 26 may read the geometry model 40 and the secondary air system model 41 from the memory 34 and control the output device 30 to present a general assembly of engine 40 and the generated secondary air system model 41 to an operator.

At block 146, the method may include performing flow network analysis using the generated secondary air system model 41. For example, the controller 26 may execute air system flow network modelling software from the memory 34 and then load the generated secondary air system model 41 and perform the flow network analysis on the generated secondary air system model 41.

Additionally or alternatively, at block 146, the method may include performing computational fluid dynamic (CFD) analysis using the cavities and links of generated secondary air system model 41. For example, the controller 26 may load the generated secondary air system model 41 into mesh generation software to generate 2D/3D mesh in cavities and links. The controller 26 may then read the mesh data to perform computational fluid dynamic analysis on the generated secondary air system model 41 using the computational fluid dynamic analysis software.

Fig. 18 illustrates a flow diagram of a method of manufacturing a secondary air system according to various examples.

At block 148, the method includes receiving the generated secondary air system model 41.

At block 150, the method includes manufacturing a secondary air system using the generated secondary air system model 150. For example, the various components forming the secondary air system may be manufactured in accordance with the data in the secondary air system model 41 and in the geometry model 40.

It will be understood that the invention is not limited to the embodiments above-described and various modifications and improvements can be made without departing from the concepts described herein. For example, the different embodiments may take the form of an entirely hardware embodiment, an entirely software embodiment, or an embodiment containing both hardware and software elements.

While the methods illustrated in the figures have been described in relation to Fig. 15, it should be appreciated that a secondary air system may be generated from other features within the geometry model. For example, a secondary air system may be automatically created from path entities and junction type non-axisymmetric features, which represent pipes and hydraulic connections within the geometry model, respectively.

Except where mutually exclusive, any of the features may be employed separately or in combination with any other features and the disclosure extends to and includes all combinations and sub-combinations of one or more features described herein.

## Claims

1. A computer implemented method of automatically designing a secondary air system for a gas turbine engine, the method comprising:
receiving a geometry model of at least a part of a gas turbine engine, the geometry model including a plurality of data entities for a plurality of features of the gas turbine engine;
defining a plurality of cavities using the plurality of data entities of the geometry model;
determining a subset of cavities of the plurality of cavities that define at least a part of the secondary air system; and
generating a secondary air system model from the determined subset of cavities that define at least a part of the secondary air system.

2. A computer implemented method as claimed in claim 1, wherein generating the secondary air system model includes generating node data entities from the subset of cavities by feature transformation.

3. A computer implemented method as claimed in claim 1 or 2, wherein generating the secondary air system model includes generating link data entities that represent airflow paths coupled to the subset of cavities by feature transformation.

4. A computer implemented method as claimed in any of the preceding claims, wherein determining the subset of cavities that define at least a part of the secondary air system includes analysing geometrical data of the defined plurality of cavities.

5. A computer implemented method as claimed in any of the preceding claims, further comprising automatically adapting the geometry model of the gas turbine engine to account for an adaptation to the secondary air system model.

6. A computer implemented method as claimed in any of the preceding claims, further comprising automatically adapting the generated secondary air system model to account for an adaptation to the geometry model.

7. A computer implemented method as claimed in any of the preceding claims, further comprising controlling output of a general assembly of the gas turbine engine including the generated secondary air system model.

8. A computer implemented method as claimed in any of the preceding claims, further comprising performing flow network analysis using the generated secondary air system model.

9. A computer implemented method as claimed in any of the preceding claims, further comprising performing computational fluid dynamic (CFD) analysis using the generated secondary air system model.

10. A method comprising:
receiving a secondary air system model generated in accordance with the computer implemented method as claimed in any of claims 1 to 9; and
manufacturing a secondary air system using the generated secondary air system model.

11. A computer program that, when read by a computer, causes performance of the method as claimed in any of claims 1 to 9.

12. Apparatus for automatically designing a secondary air system for a gas turbine engine, the apparatus comprising a controller configured to:
receive a geometry model of at least a part of a gas turbine engine, the geometry model including a plurality of data entities for a plurality of features of the gas turbine engine;
define a plurality of cavities using the plurality of data entities of the geometry model;
determine a subset of cavities of the plurality of cavities that define at least a part of the secondary air system; and
generate a secondary air system model from the determined subset of cavities that define at least a part of the secondary airflow system.

13. Apparatus as claimed in claim 12, wherein the controller is configured to analyse geometrical data of the defined plurality of cavities to determine the subset of cavities that define at least a part of the secondary air system.

14. Apparatus as claimed in claim 12 or 13, wherein the controller is configured to adapt the generated secondary air system model and automatically adapt the geometry model of the gas turbine engine to account for the adaptation of the secondary air system model.

15. Apparatus as claimed in any of claims 12 to 14, wherein the controller is configured to adapt the geometry model of the gas turbine engine and automatically adapt the generated secondary air system model to account for the adaptation of the geometry model.
